**Europäisches Patentamt**

**European Patent Office**

**Office européen des brevets**

(19)

(11) Veröffentlichungsnummer : **0 494 101 A1**

(12) **EUROPÄISCHE PATENTANMELDUNG**

(21) Anmeldenummer : **92250001.2**

(22) Anmeldetag : **03.01.92**

(51) Int. Cl.⁵ : **B65G 1/04**, B65G 1/127

(30) Priorität : **04.01.91 DE 4100360**
**04.01.91 DE 4100359**

(43) Veröffentlichungstag der Anmeldung :
**08.07.92 Patentblatt 92/28**

(84) Benannte Vertragsstaaten :
**AT BE CH DE DK ES FR GB GR IT LI LU NL PT SE**

(71) Anmelder : **Bellheimer Metallwerk GmbH**
**W-6729 Bellheim/Pfalz (DE)**

(72) Erfinder : **Bouché, Norbert, Dipl.-Ing. (FH)**
**Römerstrasse 18**
**W-6729 Kuhardt (DE)**
Erfinder : **Götz, Jürgen, Dipl.-Ing. (FH)**
**Römerstrasse 14**
**W-6729 Kuhardt (DE)**

(74) Vertreter : **Böning, Manfred, Dr. Ing. et al**
**Patentanwälte Dipl.-Ing. Dieter Jander Dr. Ing.**
**Manfred Böning Leistikowstrasse 2**
**W-1000 Berlin 19 (DE)**

(54) **Vorrichtung zum Ein- und Auslagern eines Behälters aus einem bzw. in ein Regal.**

(57) Zum Ein- und Auslagern von Gegenständen, insbesondere Behältern (1), aus einem Regal mit Fächern, deren Böden (2) an der Vorderseite Anschlagrampen (3) aufweisen, wird die Verwendung einer Vorrichtung vorgeschlagen, welche Greiferarme (5,6) aufweist, deren Enden Gleitkufen (30) bilden, die auf den jeweiligen Gegenstand gleiten können und schwenkbar an den Enden der Greiferarme (5,6) angeordnete Greiferhände (32,33) in eine Greifposition überführen können. Die Enden der Greiferarme (5,6) sind mit Ausnehmungen (27) versehen, in die ein Teil (28) des zu erfassenden Gegenstandes bzw. Behälters eindringen kann. Dieser Teil (28) wird durch die Greiferhände (32,33) in den Ausnehmungen (27) gehalten. Mit Hilfe von Stütz- und Hubarmen (17,18) ist es möglich, den von den Greiferhänden (32,33) erfaßten Teil (28) des jeweiligen Gegenstandes (1) vor dem Herausziehen aus dem Fach des Regales anzuheben, um ihn auf diese Weise ruckfrei über die Anschlagrampe (3) befördern zu können.

Fig. 1

**EP 0 494 101 A1**

Die Erfindung betrifft eine Vorrichtung zum Ein- und Auslagern eines Behälters oder anderen Gegenstandes in das bzw. aus dem Fach eines Regales, insbesondere Umlaufregales, mit Hilfe eines hin- und herbewegbaren Laufwagens oder Schlittens für mindestens einen Greiferarm, der an seinem freien Ende eine Greiferhand zum Erfassen eines Teiles des Behälters aufweist.

Aus der DE-36 10 347 Al ist eine Vorrichtung der vorstehenden Art bekannt, bei der zwei Greiferarme beidseits eines ein- bzw. auszulagernden Behälters in Schlitze eines Umlaufregalfaches fahren können. Dem Greiferarm sind hier leistenförmige Transporthilfen an den Längsseiten des Behälters zugeordnet, über die sich der Behälter auf den Greiferarm abstützen kann, wenn das Fach des Umlaufregales um einen bestimmten Betrag abgesenkt wird. Die beschriebene Anordnung ermöglicht es, den jeweiligen Behälter ungehindert über die bei Umlaufregalen praktisch unverzichtbaren Anschlagrampen am vorderen Rand des Regalfaches zu befördern, dies allerdings mit einem erheblichen sowohl konstruktiven als auch steuertechnischen Aufwand.

Der Erfindung liegt die Aufgabe zugrunde, eine Vorrichtung der in Betracht gezogenen Art zu schaffen, mit der es bei einfachem Aufbau und ohne die Notwendigkeit einer Verlagerung von Regalfächern möglich ist, insbesondere in Umlaufregalen gelagerte Behälter oder andere Gegenstände ruckfrei über am vorderen Rand von Regalfächern angeordnete Anschlagrampen zu transportieren.

Die vorstehende Aufgabe wird erfindungsgemäß dadurch gelöst, daß der Greiferarm als Huborgan für den von der Greiferhand erfaßten Teil des Behälters ausgebildet ist.

Die erfindungsgemäße Vorrichtung bietet den Vorteil, daß mit ihr ohne großen Steuerungsaufwand Behälter ruckfrei aus Regalfächern mit Anschlagrampen ausgelagert werden können, indem das von der Greiferhand erfaßte vordere Ende des jeweiligen Behälters durch den Greiferarm über die Anschlagrampe gehoben wird.

In weiterer Ausgestaltung der Erfindung wird die Greiferhand unter Verzicht auf Sensoren automatisch dadurch in die richtige Greifposition geführt, daß das Ende des Greiferarmes eine Gleitkufe bildet, die beim Aufgleiten auf einen Teil des Behälters die Greiferhand in die Greifstellung überführt. Toleranzen hinsichtlich der Positionierung des Behälters werden auf diese Art und Weise zwangsläufig ausgeglichen.

Weitere Einzelheiten und Merkmale der Erfindung ergeben sich aus den Unteransprüchen und der nachstehenden Beschreibung mehrerer in der beigefügten Zeichnung dargestellter Ausführungsbeispiele. Es zeigen mehr oder weniger schematisch:

Fig. 1 eine perspektivische Ansicht einer bevorzugten Ausführungsform,

Fig. 2 die Seitenansicht eines Greiferarmes der Vorrichtung gemäß Figur 1,

Fig. 3 die Seitenansicht einer ersten modifizierten Ausführungsform und

Fig. 4 die Seitenansicht einer zweiten modifizierten Ausführungsform.

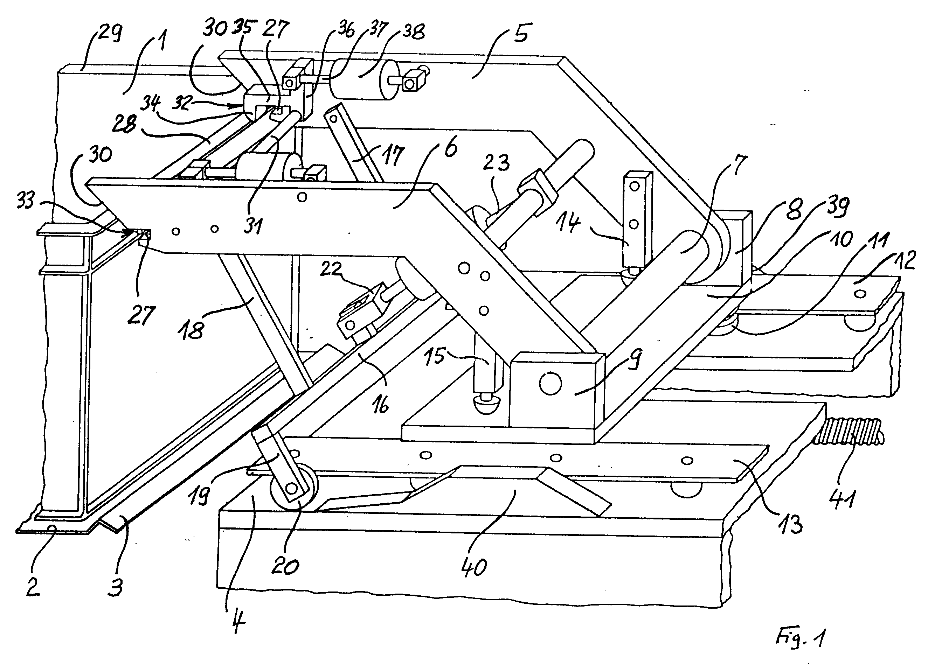

In Figur 1 ist 1 ein Behälter, der auf dem Boden 2 des Faches eines nicht gezeigten Umlaufregales abgestellt ist. Am vorderen Rand des Fachbodens 2 ist eine Anschlagrampe 3 angeordnet, die verhindert, daß der Behälter 1 beim Passieren der Umlenkstellen des Umlenkregales unter Fliehkrafteinwirkung nach außen rutscht.

An der Be- und Entladestelle des Umlaufregales ist dem Fachboden 2 ein Tisch 4 vorgelagert, auf den der Behälter 1 mit Hilfe einer im folgenden näher beschriebenen Vorrichtung überführt werden kann. Diese Vorrichtung weist zwei im Abstand voneinander angeordnete Greiferarme 5 und 6 auf, die über eine Schwenkachse 7 miteinander in Verbindung stehen, welche schwenkbar in Lagerböcken 8 und 9 gelagert ist. Die Lagerböcke 8 und 9 bilden Teile eines Laufwagens oder Schlittens 10, dessen Laufrollen 11 durch Führungsschienen 12 und 13 geführt sind. Einstellbare Anschläge 14,15 halten die Greiferarme 5 und 6 in ihrer Ausgangsposition.

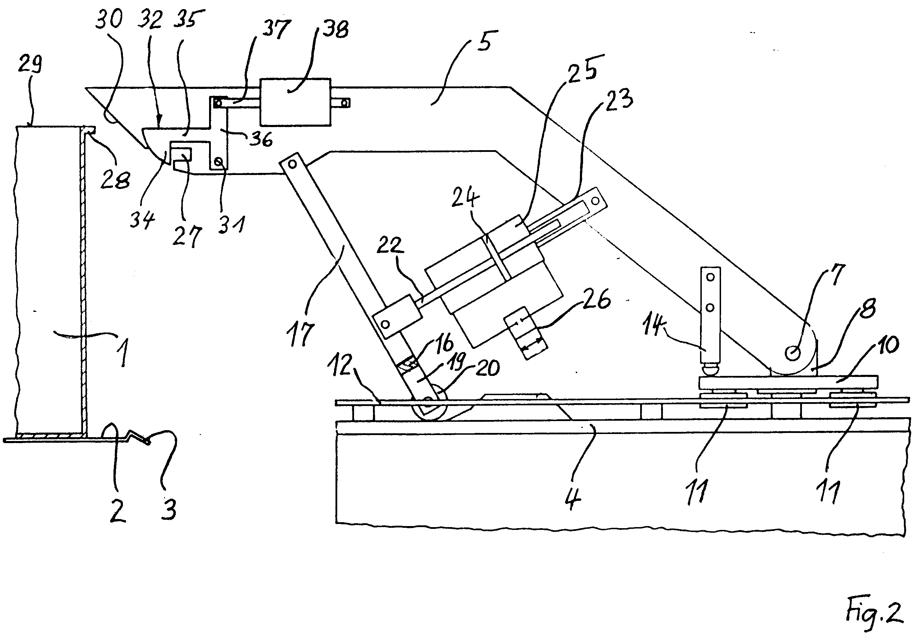

Im Abstand von der Schwenkachse 7 der Greiferarme 5,6 sind an diesen schwenkbar über einen Querträger 16 miteinander verbundene Stütz- und Hubarme 17,18 gelagert. Der Querträger 16 weist Ausleger 19 mit Rollen 20 auf, die sich auf dem Tisch 4 abstützen. An einem Vorsprung 21 des Querträgers 16 greift ein aus zwei Teilen 22 und 23 bestehender Lenker an. Zum Teil 22 des Lenkers gehört ein kolben 24 und zum Teil 23 ein Zylinder 25. Der kolben 24 und der Zylinder 25 bilden ein Hydraulikaggregat, zu dessen Steuerung ein 2/2-Wegeventil 26 dient (Fig. 2).

Das 2/2-Wegeventil 26 verhindert in einer Sperrstellung den Austausch eines Fluids zwischen den beiden durch den Kolben 24 getrennten Kammern des Zylinders 25, während es in einer Offenstellung einen derartigen Austausch zuläßt. Infolge der Inkompressibilität des Fluids nehmen die Stütz-und Hubarme 17,18 in der Sperrstellung eine unveränderbare Position ein.

Am freien Ende der Greiferarme 5,6 sind diese mit jeweils einer Ausnehmung 27 versehen, in die ein Teil des Behälters 1, und zwar vorzugsweise ein Flansch 28 am oberen Rand 29 des Behälters 1, eintauchen kann. Um den Flansch automatisch in die Ausnehmung 27 überführen zu können, formen die freien Enden der Greiferarme 5,6 Gleitkufen 30, die im Zuge ihrer Annäherung an den Behälter 1 auf dessen Rampe 28 gleiten. Sobald der Flansch 28 in den Bereich der Ausnehmung 27 gelangt ist, schwenkt er drehbar auf einer Schwenkachse 31 an den Greiferarmen 5,6 gelagerte Greiferhände 32,33 gegen die Wirkung einer nicht dargestellten Feder im Uhrzeigersinn, so daß er in die Ausnehmung 27 eindringen kann. Die Greiferhände 32,33 haben die Form eines Hakens, dessen Zinke 34 über einen Schaft 35 mit einem Querbalken 36 verbunden ist. Das eine Ende des Querbalkens 36 umschließt die Schwenkachse 31, während an das andere Ende die Betätigungsstange 37 eines Steuermechanismus 38 angreift, durch den die Greiferhände 32,33 aus ihrer Greifstellung entfernbar sind. In die Greifstellung gelangen die Zinken 34 der Greiferhände 32,33 unter der Einwirkung der bereits erwähnten Feder, sobald der obere Rand 29 des Behälters 1 von ihnen überfahren worden ist. Als Steuermechanismus 38 wird zweckmäßigerweise ein Hubmagnet verwendet, in dessen Gehäuse die die Zinke 34 in ihre Greifposition drängende Feder eingebaut ist. Dadurch, daß man die Zinke 34 der Greiferhände 32,33 in einer oberhalb der Schwenkachse 31 verlaufenden Ebene anordnet, hält sie sich selbsttätig in der Greifposition, indem die an sie angreifende Kraft ein schließendes Moment bewirkt, dessen Größe der Größe der Kraft proportional ist.

Beim Einfahren des Laufwagens bzw. Schlittens 10 in die Greifposition ist das 2/2-Wegeventil 26 geöffnet, d.h. die Stütz- und Hubarme 17,18 können Schwenkbewegungen ausführen. Soll der Behälter 1 vom Fachboden 2 auf den Tisch 4 überführt werden, so wird das 2/2-Wegeventil 26 geschlossen. Die Folge ist, daß die Stütz- und Hubarme 17,18 in ihrer Position arretiert werden. Fährt der Laufwagen bzw. Schlitten 10 anschließend zurück, so ziehen die Greiferhände 32,33 ihn vom Fachboden. Dabei gelangen die Rollen 20 der Stütz- und Hubarme 17,18 in den Bereich von Steuerkurven 39,40, und es kommt zu einer Schwenkbewegung der Greiferarme 5,6 um die Schwenkachse 7. Die Greiferarme 5,6 heben folglich den vorderen Teil des Behälters 1 über die Anschlagrampe 3 des Fachbodens 2, und der Behälter 1 wird ruckfrei vom Fachboden auf den Tisch 4 überführt. Sobald der Behälter 1 ganz auf den Tisch 4 gelangt ist, können das 2/2-Wegeventil 26 wieder geöffnet und durch den Steuermechanismus 38 die Greiferhände 32,33 in eine Freigabestellung zurückbewegt werden. Die Einleitung der Hin- und Herbewegung in den Laufwagen bzw. Schlitten 10 erfolgt über einen Spindeltrieb, dessen Spindel 41 in Figur 1 angedeutet ist.

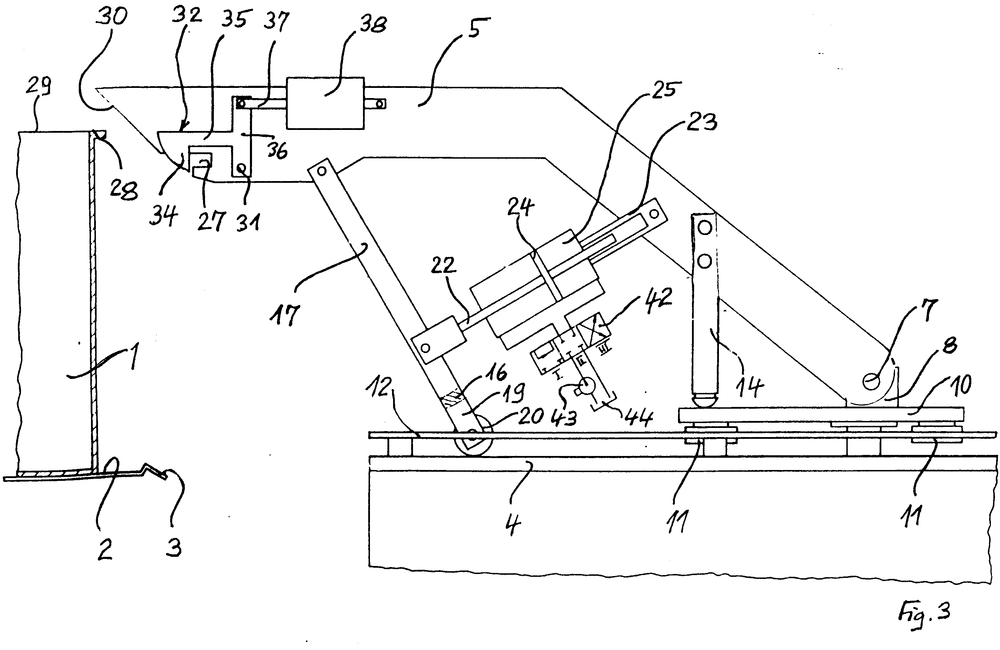

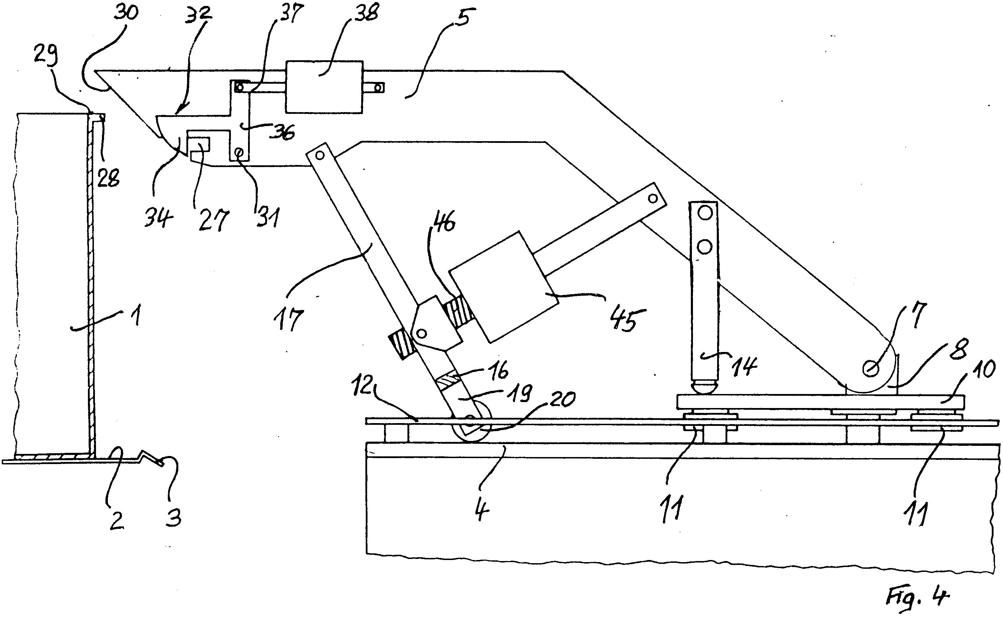

In den Figuren 3 und 4 sind zwei Modifikationen der in den Figuren 1 und 2 dargestellten Vorrichtungen gezeigt, wobei für Teile, die Teilen in den Figuren 1 und 2 entsprechen, gleiche Bezugszeichen verwendet und im folgenden lediglich noch die Unterschiede zwischen den Konstruktionen erörtert werden.

Bei der Vorrichtung gemäß Fig. 3 wird auf Steuerkurven zum Anheben der Greiferarme 5,6 verzichtet und statt dessen zur Einleitung von Hubbewegungen in die Greiferarme 5,6 das aus dem Kolben 24 und dem Zylinder 25 bestehende Hydraulikaggregat genutzt, dem in diesem Fall ein 4/3-Wegeventil 42 zugeordnet ist. Das 4/3-Wegeventil 42 steht mit einer Pumpe in Verbindung, die Öl aus einem Reservoir 44 fördern kann. Sobald der Flansch 28 des Behälters 1 in die Ausnehmung 27 eingefahren ist und die Greiferhand 32 den oberen Rand 29 des Behälters 1 erfaßt hat, wird das 4/3-Wegeventil in die Stellung I überführt. Dies bedeutet, daß die Rolle 20 auf den Tisch aufsetzen kann. Anschließend wird das 4/3-Wegeventil in die Stellung III umgeschaltet und die Pumpe 43 in Betrieb genommen. Es gelangt mithin Öl in die rechte Kammer des Zylinders 25, und der Kolben 24 wird nach links verschoben. Dabei schwenkt er die von den Stütz- und Hubarmen 17,18 gebildete Schwinge im Uhrzeigersinn, und der von den Greiferarmen 5 und 6 erfaßte Teil des Behälters 1 wird angehoben. Sobald die erwünschte Höhe erreicht ist, wird das 4/3-Wegeventil in die Stellung II geschaltet und die Pumpe 43 stillgesetzt. In der Stellung II ist die Position der Greiferarme 5,6 arretiert, und der Laufwagen bzw. Schlitten 10 kann sich unter Mitnahme des Behälters 1 zurück in seine Ausgangslage bewegen.

Bei der Ausführungsform gemäß Figur 4 schließlich dient zum Anheben der Greiferarme 5,6 ein Spindelhubgetriebe 45. Hat die Greiferhand 32 den Behälter 1 erfaßt, so wird die Spindel 46 des Spindelhubgetriebes 45 so weit ausgefahren, bis die Rolle 20 auf den Tisch 4 aufsetzt. Fährt man anschließend die Spindel 46 um einen weiteren Betrag aus, so erfolgt auch in diesem Fall ein Anheben des von der Greiferhand erfaßten Teiles des Behälters 1, und dieser kann wiederum vom Boden 2 des Faches gezogen werden, ohne daß die Anschlagrampe 3 den Auslagervorgang nachteilig beeinflußt.

## Patentansprüche

1. Vorrichtung zum Ein- und Auslagern eines Behälters (1) oder anderen Gegenstandes in das bzw. aus dem Fach eines Regales, insbesondere Umlaufregales, mit Hilfe eines hin- und herbewegbaren Laufwagens oder Schlittens (10) für mindestens einen Greiferarm (5,6), der an seinem freien Ende eine Greiferhand (32) zum Erfassen eines Teiles des Behälters (1) aufweist, dadurch **gekennzeichnet**, daß der Greiferarm (5,6) als Huborgan für den von der Greiferhand (32,33) erfaßten Teil des Behälters (1) ausgebildet ist.

2. Vorrichtung nach Anspruch 1, dadurch gekennzeichnet, daß der Greiferarm (5,6) schwenkbar am Laufwagen bzw. Schlitten (10) gelagert ist.

3. Vorrichtung nach Anspruch 2, dadurch gekennzeichnet, daß zur Einleitung einer Schwenkbewegung in den Greiferarm (5,6) ein im Abstand von der Schwenkachse (7) des Greiferarmes (5,6) schwenkbar an diesem gelagerter Stütz- und Hubarm (17,18) dient.

4. Vorrichtung nach Anspruch 3, dadurch gekennzeichnet, daß der Stütz- und Hubarm (17,18) über einen Lenker an einer Stelle des Greiferarms (5,6) angelenkt ist, die zwischen den Schwenkachsen des Stütz- und Hubarmes (17,18) und des Greiferarms (5,6) gelegen ist.

5. Vorrichtung nach Anspruch 4, dadurch gekennzeichnet, daß der Lenker aus mindestens zwei Teilen (22,23) besteht, deren Position zueinander zwecks Längenänderung des Lenkers veränderbar ist.

6. Vorrichtung nach Anspruch 5, dadurch gekennzeichnet, daß zur Veränderung der Länge des Lenkers ein Hydraulikaggregat dient.

7. Vorrichtung nach Anspruch 6, dadurch gekennzeichnet, daß das Hydraulikaggregat einen durch ein Mehrwegeventil (26;42) steuerbaren Kolben (24) aufweist.

8. Vorrichtung nach Anspruch 5, dadurch gekennzeichnet, daß zur Veränderung der Länge des Lenkers ein Spindelhubgetriebe (45) dient.

9. Vorrichtung nach einem der Ansprüche 4 bis 7, dadurch gekennzeichnet, daß dem freien Ende des Stütz- und Hubarmes (17,18) eine Steuerkurve (39,40) zur Einleitung von Schwenkbewegungen in den Greiferarm (5,6) zugeordnet ist.

10. Vorrichtung nach einem der Ansprüche 1 bis 9, dadurch gekennzeichnet, daß der Stütz- und Hubarm aus mindestens zwei Teilen besteht, deren Position zueinander zwecks Längenänderung des Stützarmes verstellbar ist.

11. Vorrichtung zum Ein- und Auslagern eines Behälters (1) oder anderen Gegenstandes in das bzw. aus dem Fach eines Regales, insbesondere Umlaufregales, mit Hilfe eines hin- und herbewegbaren Laufwagens oder Schlittens (10) für mindestens einen Greiferarm (5,6), der an seinem freien Ende eine Greiferhand (32) zum Erfassen eines Teiles des Behälters (1) aufweist, insbesondere nach einem der Ansprüche 1 bis 10, dadurch **gekennzeichnet**, daß das Ende des Greiferarmes (5,6) eine Gleitkufe (30) bildet, die beim Aufgleiten auf einen Teil des Behälters (1) die Greiferhand (32,33) in die Greifstellung überführt.

12. Vorrichtung nach einem der Ansprüche 1 bis 11, dadurch gekennzeichnet, daß der Greiferarm (5,6) mit einer Ausnehmung (27) zur Aufnahme eines Teiles (28) des Behälters (1) versehen ist.

13. Vorrichtung nach Anspruch 12, dadurch gekennzeichnet, daß die Greiferhand (32,33) als Sperriegel für den in die Ausnehmung (27) eingedrungenen Teil (28) des Behälters (1) ausgebildet ist.

14. Vorrichtung nach einem der Ansprüche 1 bis 13, dadurch gekennzeichnet, daß die Greiferhand (32,33) beweglich am Ende des Greiferarms (5,6) gelagert ist.

15. Vorrichtung nach einem der Ansprüche 1 bis 14, dadurch gekennzeichnet, daß die Greiferhand (32,33) eine schwenkbar am Ende des Greiferarmes (5,6) gelagerte Flinke bildet.

16. Vorrichtung nach einem der Ansprüche 1 bis 15, dadurch gekennzeichnet, daß der Greiferhand (32,33) eine Feder zugeordnet ist, die sie in die Greifstellung drängt.

17. Vorrichtung nach einem der Ansprüche 1 bis 16, dadurch gekennzeichnet, daß die Greiferhand (32,33) durch einen Steuermechanismus (38) aus der Greifstellung entfernbar ist.

18. Vorrichtung nach Anspruch 17, dadurch gekennzeichnet, daß der Steuermechanismus (38) von einem Hubmagneten gebildet wird.

19. Vorrichtung nach Anspruch 17 oder 18, dadurch gekennzeichnet, daß die Greiferhand (32,33) einen Haken mit einer Zinke (34) und einen Schaft (35) bildet, der an seinem der Zinke (34) abgewandten Ende in einen Querbalken (36) übergeht, dessen eines Ende schwenkbar am Greiferarm (5,6) gelagert ist und an dessen anderem Ende der Steuermechanismus (38) angreift.

20. Vorrichtung nach Anspruch 19, dadurch gekennzeichnet, daß die Zinke (34) der Greiferhand (32,33) oberhalb einer durch ihre Schwenkachse (31) verlaufenden Ebene angeordnet ist.

21. Vorrichtung nach einem der Ansprüche 1 bis 20, dadurch gekennzeichnet, daß der Greiferarm (5,6) durch mindestens einen verstellbaren Anschlag (14,15) in einer Ausgangsposition gehalten wird.

22. Vorrichtung nach einem der Ansprüche 1 bis 21, dadurch gekennzeichnet, daß sie zwei im Abstand voneinander, auf einem verschiebbaren Laufwagen oder Schlitten (10) angeordnete Greiferarme (5,6) mit Greiferhänden (32,33) aufweist.

Fig. 1

EP 0 494 101 A1

Fig.2

Fig. 3

Fig. 4

**Europäisches Patentamt**

# EUROPÄISCHER RECHERCHENBERICHT

Nummer der Anmeldung

EP    92 25 0001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 101 574 (SPS TECHNOLOGIES INC.) <br> * das ganze Dokument * | 1,2 | B65G1/04 <br> B65G1/127 |
| A | | 3,11, 14-16,22 | |
| | --- | | |
| X | PATENT ABSTRACTS OF JAPAN <br> vol. 7, no. 110 (M-214)(1255) 13. Mai 1983 <br> & JP-A-58 031 801 ( HITACHI SEISAKUSHO ) 24. Februar 1983 <br> * Zusammenfassung * | 1,2 | |
| A | | 14,15 | |
| | --- | | |
| X | DE-A-3 837 152 (REINDERS-KUNSTSTOFF) <br> * Spalte 2, Zeile 20 - Spalte 3, Zeile 58; Abbildungen 1-3 * | 1 | |
| | --- | | |
| D,A | DE-A-3 610 347 (FRAUNHOFER-GESELLSCHAFT) <br> * Spalte 8, Zeile 19 - Zeile 68; Abbildungen 1,3 * | 1 | |
| | ----- | | **RECHERCHIERTE SACHGEBIETE (Int. Cl.5)** <br><br> B65G |

Der vorliegende Recherchenbericht wurde für alle Patentansprüche erstellt

| Recherchenort | Abschlußdatum der Recherche | Prüfer |
|---|---|---|
| BERLIN | 10 APRIL 1992 | SIMON J. |

EPO FORM 1503 03.82 (P0403)